# FASCICULE DE BREVET EUROPEEN

(11) **EP 0 651 242 B1**
(45) Date de publication et mention de la délivrance du brevet: **22.04.1998**
(21) Numéro de dépôt: 94402424.9
(22) Date de dépôt: 27.10.1994
(51) Int. Cl.: G01M 3/24

(54) **Procédé et dispositif de détection et de localisation de fuite de gaz d'une enceinte de confinement à double paroi**
Verfahren und Anordnung für die Detektion und Ortung eines Gaslecks in einem doppelwandigen Sicherheitsbehälter
Procedure and device for the detection and localisation of gas leak in a double-walled containment vessel

(30) Priorité: 29.10.1993 FR 9312939
(43) Date de publication de la demande: 03.05.1995
(73) Titulaire: COMMISSARIAT A L'ENERGIE ATOMIQUE, 75015 Paris (FR)
(72) Inventeur: Journeau, Christophe, F-13770 Venelles (FR); Thomann, Frédéric, F-84120 Pertuis (FR)
(74) Mandataire: Dubois-Chabert, Guy

(56) Documents cités:
- EP-A- 0 140 174
- US-A- 5 231 866
- PATENT ABSTRACTS OF JAPAN vol. 16, no. 301 (P-1379) 3 Juillet 1992 & JP-A-40 081 633 (HITACHI LTD.) 16 Mars 1992

## Description

### Domaine technique

L'invention concerne un procédé et un dispositif pour détecter et localiser, par une écoute acoustique, les fuites de gaz d'une enceinte de confinement à double paroi.

Elle trouve une application pour la surveillance des enceintes de confinement des installations nucléaires et, plus particulièrement, des réacteurs à eau pressurisée.

### Etat de la technique

Actuellement, la surveillance de l'étanchéité des enceintes de confinement d'installations nucléaires est souvent effectuée au moyen de bilans de gaz. Ces bilans consistent à mesurer la pression et la température dans l'enceinte pour y calculer la masse de gaz, et en déduire d'éventuelles pertes. Un tel procédé permet de détecter une fuite, mais il ne permet ni de la localiser, ni d'en estimer le type (collectée, non-collectée, générique, etc.).

Par ailleurs, des procédés de détection et de localisation de bruits par écoute acoustique sont couramment utilisés dans le domaine des sonars passifs. Un de ces procédés est décrit dans l'article "Acoustical Oceanograghy" de C. S. CLAY et H. MEDWIN, publié dans Wiley-Interscience, New York 1977. De tels procédés ont pour inconvénient de ne pouvoir être mis en oeuvre qu'en milieu sous-marin.

Un autre procédé de détection et de localisation de bruits par écoute acoustique est connu et décrit dans la demande de brevet US-4 910 718. Ce procédé est mis en oeuvre pour le contrôle des structures métalliques d'avions. A cette fin, il exploite des signaux dans une gamme de fréquences de 100 à 500 KHz. Des signaux à de telles fréquences ne peuvent être utilisés pour une détection de bruits dans un espace tridimensionnel.

En outre, il est connu d'effectuer la surveillance de circuits et de composants de centrales nucléaires par des écoutes acoustiques. Des procédés permettant une telle écoute acoustique sont décrits dans les brevets soviétiques 1 456 873 et allemand DDR-206 215. Selon ces procédés, l'écoute acoustique est réalisée dans les conditions de l'acoustique des salles, sans guidage particulier des ondes. De plus, les procédés décrits dans ces deux documents ne traitent que des données d'autospectre (sans phase) ; les bruits de fond ne peuvent donc pas être pris en considération dans les traitements.

### Exposé de l'invention

La présente invention a justement pour but de remédier à ces inconvénients. A cette fin, elle propose un procédé et un dispositif pour détecter et localiser, par une écoute acoustique, les fuites de gaz d'une enceinte à deux parois qui constituent un guide d'ondes pour les ondes acoustiques.

De façon plus précise, l'invention concerne un procédé de détection et de localisation de fuite de gaz provenant d'une enceinte de confinement à double paroi. Ce procédé se caractérise par le fait qu'il consiste à effectuer, entre les deux parois, une écoute acoustique pour détecter les bruits de fuite dont le niveau sonore est supérieur à celui des bruits de fond. L'écoute acoustique consiste en une localisation large pour déterminer la zone de l'enceinte d'où proviennent les bruits de fuite puis une localisation étroite pour déterminer, ponctuellement dans cette zone, le bruit de fuite.

Ce procédé est donc simple à mettre en oeuvre.

L'invention concerne, en outre, un dispositif mettant en oeuvre le procédé exposé ci-dessus. Ce dispositif se caractérise par le fait qu'il comporte au moins deux antennes disposées dans un espace interparois pour réaliser une localisation large du bruit de fuite, ledit espace interparois réalisant un guide d'ondes clos qui assure la propagation des bruits de fuite provenant de l'enceinte.

Selon l'invention, chaque antenne comporte une pluralité de capteurs réalisant une localisation étroite du bruit de fuite.

Selon un mode de réalisation de l'invention, ces capteurs sont des microphones.

Le dispositif de l'invention peut comporter un système de traitements connecté à chaque capteur et disposé à l'extérieur de l'enceinte de confinement.

Ce dispositif peut être mis en oeuvre pour détecter et localiser les fuites d'une enceinte de confinement d'un réacteur à eau pressurisée ou de tout autre type d'enceinte de confinement à double paroi.

Il permet de localiser des fuites à longues distance, et de façon relativement précise.

En outre, le temps de réponse du système est court puisque inférieur à une heure.

### Brève description des dessins

- La figure 1 représente schématiquement une coupe verticale d'un réacteur à eau pressurisée comportant une enceinte à double paroi dans laquelle est implanté le dispositif selon l'invention ;
- la figure 2 représente, schématiquement, le dispositif de l'invention.

### Exposé détaillé d'un mode de réalisation de l'invention

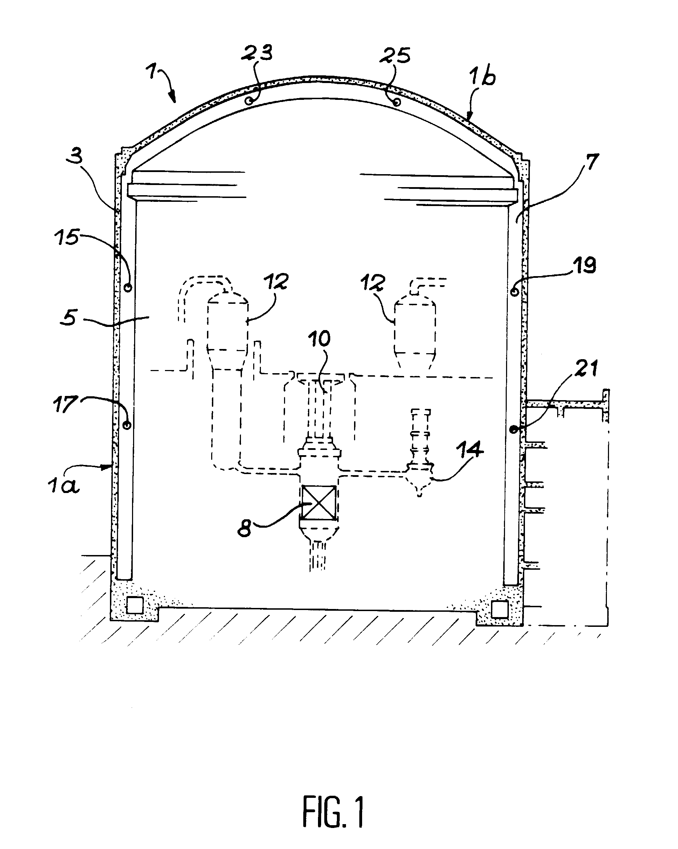

Sur la figure 1, on a représenté schématiquement un réacteur à eau pressurisée, selon une coupe verticale. Ce réacteur à eau pressurisée (nommé plus simplement REP) comporte une enceinte de confinement 1 à double paroi 3 et 5.

Selon le réacteur à eau pressurisée représenté sur cette figure 1, l'enceinte 1 a la forme d'un cylindre 1a surmonté d'un dôme 1b. La paroi intérieure 5 de l'enceinte 1 est réalisée en béton précontraint. La paroi extérieure 3 de l'enceinte 1 est réalisée en béton armée. Un espace interparois, référencé 7, sépare la paroi intérieure 5 de la paroi extérieure 3. En court d'opération, cet espace interparois 7 est légèrement dépressurisé tant par rapport à l'intérieur de l'enceinte 1 que par rapport à l'atmosphère.

Les parois 3 et 5 de l'enceinte 1 constituent, de part leur géométrie annulaire, un guide d'ondes acoustiques permettant une meilleure transmission des bruits, essentiellement des bruits de fuite, que cela ne serait le cas dans un espace moins confiné. Ce guide d'ondes clos et fini, est défini par le rapport entre la dimension maximale et la dimension minimale de l'espace interparois de l'enceinte 1 qui équivaut au moins à 10/1 (selon la norme ISO, le rapport des dimensions d'une salle en acoustique étant un rapport inférieur à 3/1).

A l'intérieur de cette enceinte 1, ont été représentés, pour une meilleure compréhension de l'invention, le réacteur référencé 8, l'instrumentation 10 liée à ce réacteur 8, le générateur de vapeur 12 et une pompe 14.

Selon l'invention, plusieurs antennes acoustiques sont disposées dans l'espace interparois 7. Selon le mode de réalisation représenté sur cette figure 1, huit antennes sont disposées dans la partie cylindrique de l'enceinte 1 et deux antennes acoustiques sont réparties dans le dôme lb de l'enceinte 1. Ce réacteur à eau pressurisée a été représenté en coupe verticale, on peut voir sur cette figure 1 quatre antennes acoustiques dans la partie cylindrique la, référencées 15, 17, 19 et 21 et les deux antennes acoustiques disposées dans le dôme lb sont référencées 23 et 25.

Chaque antenne disposée dans l'espace interparois 7 comporte une pluralité de capteurs. Selon le mode de réalisation préféré de l'invention, chaque antenne comporte trois capteurs, ces capteurs étant, de préférence, des microphones. Selon un mode de réalisation de l'invention, chaque antenne comporte en outre une structure de supportage apte à diriger la collection du son vers chaque antenne.

Le dispositif décrit précédemment met en oeuvre un procédé d'écoute acoustique des bruits de fuite de gaz provenant de l'enceinte 1 et, plus précisément, provenant de la paroi intérieure 5 de cette enceinte. Ce procédé consiste donc à détecter et à localiser les éventuelles fuites, à travers la paroi intérieure 5 de l'enceinte 1, du gaz radioactif qui polluerait l'enceinte interne en cas d'accident.

Ce procédé consiste, d'une part, en une localisation large du bruit de fuite. On entend par "localisation large" une localisation générale dans toute l'enceinte 1 du bruit de fuite. Cette localisation large est réalisée par les antennes disposées tout autour de la paroi intérieure 5 de l'enceinte 1 dans l'espace interparois 7. Ces antennes déterminent, en fonction des niveaux sonores qu'elles reçoivent, si le bruit reçu est un bruit de fond ou, au contraire, un bruit de fuite, le niveau sonore du bruit de fuite étant supérieur au seuil sonore défini par le bruit de fond. L'antenne qui détecte le bruit de niveau sonore le plus élevé est alors sélectionnée. La fuite provient donc de la zone de la paroi intérieure 5 (appelée zone de fuite) que l'antenne sélectionnée recouvre acoustiquement.

On peut préciser que le niveau sonore reçu par chaque antenne est un niveau sonore moyen obtenu en faisant la moyenne des niveaux sonores reçus par chacun des capteurs (ou microphones) de l'antenne.

D'autre part, lorsque la zone de fuite est déterminée, une localisation étroite du bruit de fuite est effectuée. On entend par localisation étroite du bruit de fuite, une localisation ponctuelle par une seule antenne de la fuite dans la zone à contrôler. On détermine alors l'emplacement précis de la fuite en sélectionnant le capteur qui, pour l'antenne sélectionnée, a enregistré le bruit ayant le niveau sonore le plus important.

L'écoute acoustique selon ce procédé est effectuée pour une gamme de fréquences telle que, d'une part, le rapport signal du bruit de fuite/signal de bruit de fond soit bon, et, d'autre part, l'atténuation des signaux sonores soit telle que le bruit d'une fuite se propage dans tout l'espace interparois, mais que les ondes sonores parcourant plusieurs fois le tour de l'enceinte soit suffisamment atténuées pour ne pas gêner la localisation de la fuite.

Aussi, le bruit de fond "large bande" se situant en général entre 0 et 5 KHz, et le bruit de fuite "large bande" se situant en général entre 6 et 20 KHz, la fréquence d'écoute choisie est située dans la gamme allant de 8 KHz à 12 KHz.

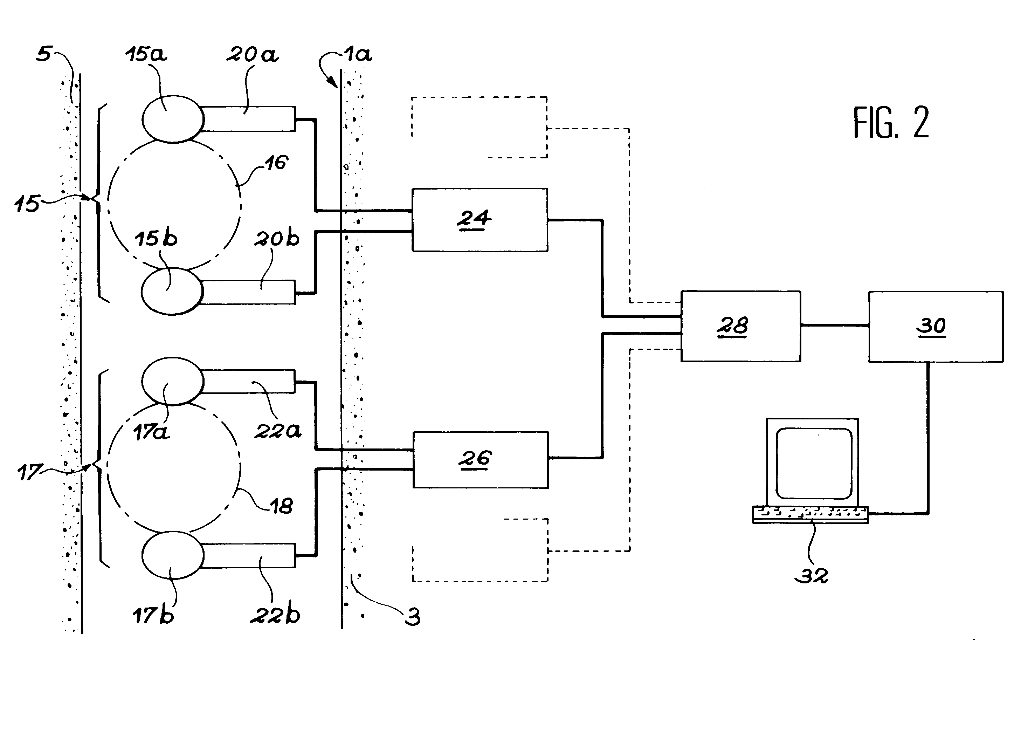

Sur la figure 2, on a représenté, schématiquement, le circuit de connexion des antennes disposées dans l'espace interparois sur un système de traitement disposé à l'extérieur du bâtiment réacteur. Sur cette figure 2, on a représenté, en traits discontinus, les parois intérieure 5 et extérieure 3. A l'intérieur de ces parois, sont représentées deux des antennes disposées dans la partie cylindrique de l'espace interparois. Ces antennes sont, par exemple, les antennes qui ont été référencées 15 et 17 sur la figure 1. Chacune de ces antennes 17 et 15 comporte trois microphones dont deux seulement sont visibles sur cette figure 2. Les microphones (ou capteurs) de l'antenne 15 sont référencés 15A et 15B. De même, les microphones de l'antenne 17 sont référencés 17A et 17B. Chaque antenne 15 et 17 comporte en outre une structure de supportage référencée, respectivement, 16 et 18. En outre, chaque microphone 15A, 15B, 17A, 17B est connecté à un préamplificateur référencé, respectivement, 20A, 20B, 22A, 22B. Les signaux issus des microphones 15A, 15B, 17A, 17B sont convertis en tension par le préamplificateur qui lui est associé. De plus, des moyens d'alimentation fournissent ces microphones en énergie. Les microphones d'une même antenne sont alimentés par un même moyen d'alimentation. Ainsi, le moyen d'alimentation 24 alimente en énergie les microphones 15A et 15B de l'antenne 15. Parallèlement, les moyens d'alimentation 26 fournissent en énergie les microphones 17A et 17B de l'antenne 17. Ces moyens d'alimentation 24 et 26 sont, de préférence, disposés à l'extérieur de l'enceinte de confinement 1. De même, les signaux issus des microphones sont amenés hors de l'enceinte 1 pour être traités. Ils peuvent être traités, par exemple, dans une salle de mesure.

Le traitement de ces signaux issus des microphones consiste en un filtrage effectué par le filtre 28, pour ne conserver que les fréquences situées dans la gamme de fréquences choisie [8-12 KHz]. Il consiste en outre en une amplification réalisée par l'amplificateur 30. Un système électronique du type PC, référencé 32, effectue ensuite la recherche de bruits de niveaux sonores élevés par rapport aux seuils sonores des bruits de fond. La localisation de la fuite s'effectue donc en comparant les niveaux sonores des différents bruits reçus par les antennes. Ce traitement assure donc la localisation large du bruit de fuite.

Les signaux large bande issus des microphones de chacune des deux antennes les plus proches, selon des lois déduites de la géométrie de l'espace annulaire, sont traités en modules et en phases. Ce traitement fournit ainsi une information sur la localisation précise de la source sonore, c'est-à-dire de la fuite. Ce dernier traitement assure la localisation étroite de la fuite.

La précision obtenue, par ce procédé, sur la taille de la zone de localisation est de l'ordre de 1 % de la surface de la paroi intérieure 5 de l'enceinte, ce qui correspond, pour un REP de taille moyenne, à une surface de localisation d'environ 10 mètres x 10 mètres, pour une fissure de l'ordre du millimètre carré.

Selon un autre mode de réalisation de l'invention, une antenne comportant une pluralité de capteurs peut être disposée sur une plate-forme mobile, robotisée, apte à se déplacer dans l'espace interparois. Cette antenne mobile peut ainsi rechercher la (ou les) zone(s) où un bruit de fuite est détecté. Un tel mode de réalisation a pour avantage de permettre l'obtention d'une meilleure localisation avec un nombre d'antennes restreint.

## Revendications

1. Procédé de détection et de localisation de fuite de gaz d'une enceinte (1) de confinement à double paroi (3, 5),
caractérisé en ce qu'il consiste à effectuer, entre les deux parois (3, 5), une écoute acoustique pour détecter les bruits de fuite ayant un niveau sonore supérieur à celui des bruits de fond, l'écoute acoustique consistant en une localisation large pour déterminer la zone de l'enceinte d'où proviennent les bruits de fuite et une localisation étroite pour déterminer ponctuellement, dans cette zone, les bruits de fuite.

2. Dispositif de détection et de localisation de fuite de gaz mettant en oeuvre le procédé selon la revendication 1, caractérisé en ce qu'il comporte au moins deux antennes (15, 17) disposées dans un espace interparois (7) formant un guide d'ondes clos dans lequel se propagent des bruits de fuite provenant de l'enceinte et réalisant une localisation large du bruit de fuite, chacune de ces antennes comportant une pluralité de capteurs réalisant une localisation étroite du bruit de fuite.

3. Dispositif selon la revendication 2,
caractérisé en ce que les capteurs sont des microphones.

4. Dispositif selon la revendication 2 ou 3,
caractérisé en ce qu'il comporte des moyens de traitements (24-32) connectés à chaque capteur et disposé à l'extérieur de l'enceinte de confinement.

5. Dispositif selon l'une quelconque des revendications 2 à 4, caractérisé en ce que les antennes sont fixées chacune sur une plate-forme mobile robotisée apte à se déplacer dans l'espace interparois.

## Patentansprüche

1. Verfahren für die Detektion und Ortung eines Gaslecks in einem Sicherheitsbehälter mit doppelter Wand (3, 5),
**dadurch gekennzeichnet**,
daß es darin besteht, zwischen den beiden Wänden (3, 5) ein akustisches Abhören durchzuführen, um diejenigen Leckgeräusche zu detektieren, die einen höheren Geräuschpegel haben als die Grundgeräusche, wobei das akustische Abhören aus einer breiten Ortung besteht, um die Zone des Behälters zu bestimmen, aus der die Leckgeräusche kommen, und aus einer engen Ortung, um die Leckgeräusche punktuell in dieser Zone zu bestimmen.

2. Anordnung für die Detektion und Ortung eines Gaslecks zur Durchführung des Verfahrens nach Anspruch 1, dadurch gekennzeichnet, daß sie wenigstens zwei in einem Raum (7) zwischen den Wänden angeordnete Antennen (15, 17) umfaßt, die einen geschlossenen Wellenleiter bilden, in dem sich Leckgeräusche, die aus dem Behälter kommen, fortpflanzen und eine breite Ortung des Leckgeräusches realisieren, wobei jede dieser Antennen eine Vielzahl von Sensoren umfaßt, die eine enge Ortung des Leckgeräusches realisieren.

3. Anordnung nach Anspruch 2, dadurch gekennzeichnet, daß die Sensoren Mikrophone sind.

4. Anordnung nach Anspruch 2 oder 3, dadurch gekennzeichnet, daß sie Verarbeitungseinrichtungen (24-32) umfassen, die mit jedem Sensor verbunden sind und außerhalb des Sicherheitsbehälters angeordnet sind.

5. Anordnung nach einem der Ansprüche 2 bis 4, dadurch gekennzeichnet, daß jede der Antennen an einer robotisierten beweglichen Einrichtung befestigt ist, die sich in dem Raum zwischen den Wänden bewegen bzw. verschieben kann.

## Claims

1. Process for the detection and location of gas leaks in a confinement enclosure (1) with double walls (3, 5), characterized in that it consists of performing, between the two walls (3, 5), an acoustic monitoring in order to detect leak noises having a sound level above that of the background noises, the acoustic monitoring consisting of a wide location for determining the area of the enclosure from which the leak noises come and a narrow location for determining the leak noises in punctiform manner within said area.

2. Apparatus for the detection and location of gas leaks for performing the process according to claim 1, characterized in that it has at least two antennas (15, 17) in the inter-wall space (7) for performing a wide location of the leak noise, said inter-wall space forming a closed waveguide ensuring the propagation of the leak noises from the enclosure, each antenna incorporates a plurality of sensors performing a narrow location of the leak noise.

3. Apparatus according to claim 2, characterized in that the sensors are microphones.

4. Apparatus according to claim 2 or 3, characterized in that it incorporates processing means (24-32) connected to each sensor and located outside the confinement enclosure.

5. Apparatus according to any one of the claims 2 to 4, characterized in that each of the antennas is fixed to a robotized, mobile platform able to move within the inter-wall space.
